# EUROPEAN PATENT SPECIFICATION

(11) **EP 2 412 513 B1**
(45) Date of publication and mention of the grant of the patent: **18.07.2012**
(21) Application number: 10425259.8
(22) Date of filing: 29.07.2010
(51) Int. Cl.: B29C 49/46, B29C 49/56, B29C 49/58

(54) **Apparatus for blow-molding containers**
Vorrichtung zur Blasformung von Behältern
Appareil pour mouler des récipients par soufflage

(43) Date of publication of application: 01.02.2012
(73) Proprietor: Gea Procomac S.p.A., 43038 Sala Baganza (PR) (IT)
(72) Inventor: Dordoni, Claudio, 43126 Parma (IT); Troadec, Bernard, 44210 Pornic (FR)
(74) Representative: Gotra, Stefano

(56) References cited:
- EP-A1- 1 982 820
- EP-A2- 0 464 933
- DE-A1-102008 038 141
- US-A- 4 880 581

## Description

The present invention relates to an apparatus for moulding containers of the type described in the preamble of claim 1.

The invention finds application in the moulding and treatment of plastic containers industry, such as PET bottles.

As it is known, the process of moulding of plastic containers is performed by linear or rotational moulding machines which produce containers by stretching and blow moulding heated parisons.

These machines are equipped with a plurality of treatment stations, each of which is equipped with a moulding apparatus comprising a mould consisting of two half-moulds, which reproduce the shape of the sidewalls of the container to be produced.

The mould has a first closure element, called mould bottom, which reproduces the shape of the bottom of the container to be produced. This mould bottom is movable between a resting position in which it is disengaged from the mould, and an operating position in which it is locked between the two half-moulds.

The parison, heated in advance, is inserted into the mould and is positioned between the two half-moulds. Subsequently, the mould bottom moves towards the bottom of the parison while the two half-moulds close, locking the mould bottom inside. The two half-moulds are locked in the closed position by mechanical locking systems. Each moulding apparatus also comprises a second closure element, called the "blowing nozzle" which has the task of hermetically sealing the entrance of the parison at its neck and delivering pressurized air inside said parison. In particular, the blowing nozzle is movable between a resting position, where it is far from the parison, and an operating position in which it draws near and acts on the neck of the parison.

In the early stages of the moulding process, the blowing nozzle delivers air at a medium pressure (up to 15 bars) inside the parison. Simultaneously to the air delivered at medium pressure, a stretching rod is progressively extended and inserted into the parison until reaching its bottom. After touching said bottom, the stretching rod continues its linear stroke to stretch the parison until it reaches about the same length of the container to be produced.

Subsequently, the blowing nozzle blows air at high pressure (approximately 40 bars) into the parison, so as to expand it and make it adhere to the inner walls of the half-moulds and the mould bottom. Meanwhile, the stretching rod retracts until it is outside the container. The high pressure air is maintained for a few moments inside the container, so as to consolidate the moulding thereof.

Subsequently, the air inside the container is discharged through said blowing nozzle. At the end of said discharge process, the blowing nozzle is moved to the disengaged position with respect to the container. After the removal of the blowing nozzle, the locking systems disengage from the two half-moulds which can then be opened, allowing the removal of the mould bottom and the subsequent extraction of the moulded container.

Moulding apparatuses of the type described above are shown, for example, in documents US2002/0093126, EP1980386, DE102007022638.

With particular reference to the operation of the blowing nozzle, it is noted that it is a moving component that is drawn near the parison at the neck of the same when it is already positioned inside the mould. The object of the blowing nozzle is to connect the interior of the parison with the medium and high pressure compressed air circuit and meanwhile ensure the tightness of the circuit through a sealing action at the entrance of the container.

In accordance with the recent prior art, the blowing nozzle is driven by a pneumatic system. In particular, the blowing nozzle's movements of drawing near to and moving away from the neck of the parison are driven by low pressure air (up to 6 bar), which acts fluid-dynamically on striking surfaces inside the blowing nozzle itself.

In accordance with an obsolete technique in prior art, there are blowing nozzles directly and mechanically controlled by cams and rolls.

The apparatuses for moulding containers described above have the significant disadvantage of not being usable in a sterile environment, that is an environment that can be washed, sterilized and kept under controlled microbiological contamination conditions. In fact, it is noted that all the components of the apparatus for moulding containers involved in production of the containers should be able to be washed, sterilized and kept in a contamination controlled environment. Disadvantageously, the blowing nozzles of the apparatuses for moulding containers made in accordance with the prior art are not washable or sterilizable. In particular, some parts needed to guide the blowing nozzle during the movements of drawing near to and moving away from the parison cannot be sterilized given that they cannot be reached by the sterilizing agents since they are inside and in contact with enclosed areas of the blowing nozzle.

Other parts necessary to guide the blowing nozzle, although accessible by sterilizing agents, continuously come into contact with non-sterile surfaces or environments during the operation of the blowing nozzle itself.

Therefore, disadvantageously, said parts become unsterile and thus vehicles for the contamination of sterilized areas.

Another drawback which excludes pneumatically driven blowing nozzle from applications in sterile environments is the impossibility of sterilizing the low pressure air circuit (up to 6 bars). Since the air at low pressure is also used to control other pneumatic cylinders which, due to their internal design and for their operation cannot be sterilized, two low pressure air circuits should be provided, with a significant increase in the cost and complexity of the machine.

A device for manufacturing plastic containers in a sterile environment is disclosed in document EP 0464933. This device achieves a high flexibility due to the presence of moulding units which are detachably mounted on a turntable. Document US 4880581 also discloses an apparatus and a method for aseptic production of articles by means of isolating shrouds.

Finally, it must be mentioned that many known installations also use filters in order to prevent new particles from entering the blowing zone (i.e. document EP 1982820).

In this context, the technical task at the base of the present invention is to propose an apparatus for moulding containers which overcomes the disadvantages of the prior art mentioned above.

In particular, it is an object of the present invention to provide an apparatus for moulding containers able to operate in contamination controlled environments, that is, in aseptic conditions.

It is a further object of the present invention to propose an apparatus for moulding containers able to be sterilized easily.

It is another object of the present invention to create an apparatus for moulding containers that is reliable and simple to build.

The technical task and the objects specified are substantially achieved by an apparatus for moulding containers comprising the technical characteristics set out in one or more of the appended claims.

Additional features and advantages of the present invention will become more evident from the indicative, and therefore not limiting, description of a preferred but not exclusive embodiment of an apparatus for moulding containers, as shown in the attached drawings in which:
- Figure 1 is a perspective view illustrating an apparatus for moulding containers according to the invention;
- Figure 2 is a partially sectioned side view illustrating the apparatus shown in Figure 1;
- Figure 3 is a side view illustrating the blowing nozzle inserted in the apparatus shown in Figure 2;
- Figure 4 is a sectional view of the blowing nozzle according to the B-B outline in Figure 3;
- Figure 5 is a sectional view of the blowing nozzle according to the A-A outline in Figure 3;
- Figure 6 is a sectional view of the blowing nozzle according to the C-C outline in figure 3;
- Figure 7 is a perspective view illustrating a construction detail of the apparatus shown in Figure 1;
- Figure 8 is a top view illustrating the blowing nozzle shown in the preceding Figures from 3 to 7;
- Figure 9 is a partially sectioned side view of the blowing nozzle according to the D-D outline in Figure 8;

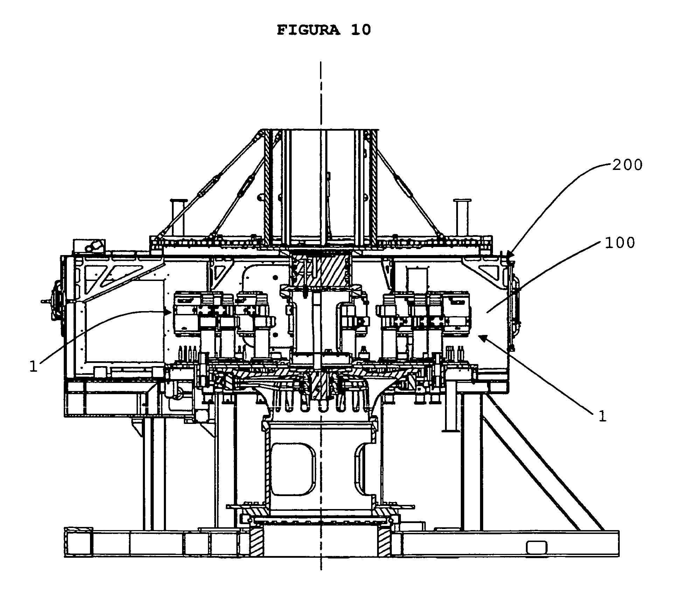

- Figure 10 is a sectional view of an insulator, where the mould comprising the apparatus is housed.

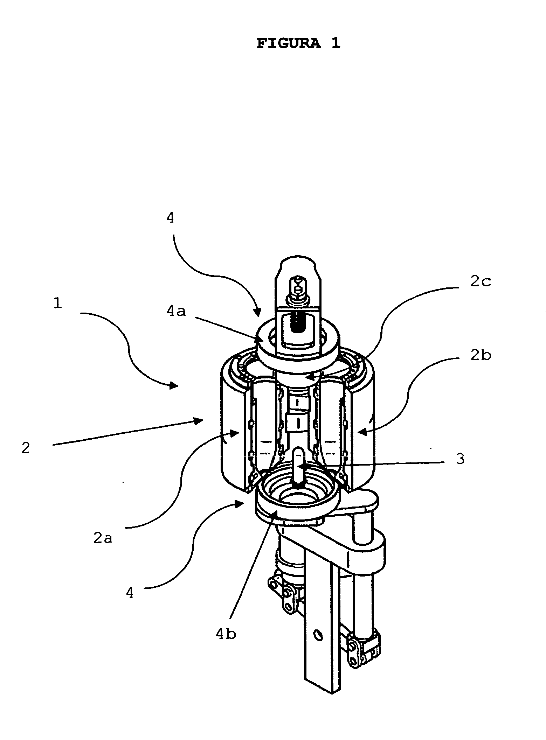

With reference to the figures, particularly to Figures 1, 2 and 7, an apparatus for moulding containers according to the invention will be generally indicated with number 1.

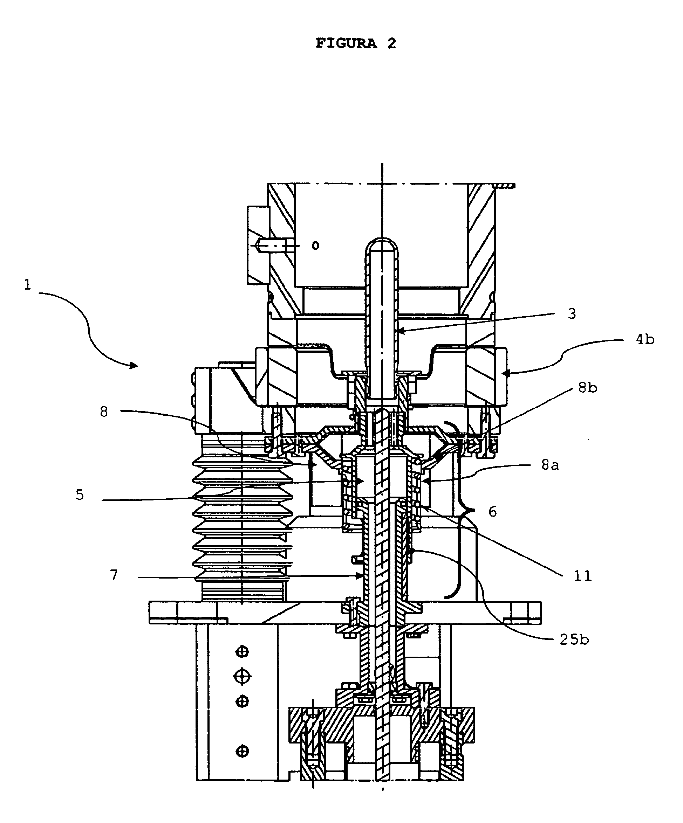

With reference to figures 1 and 2, the apparatus 1 comprises a mould 2 adapted to receive a parison 3 made of plastic material, typically PET. The mould 2 is housed in a contamination controlled environment 100 (delimited by an insulator 200) and composed of two half-moulds 2a, 2b mutually movable for the drawing near to and moving away from operations, in such a way that the mould 2 is movable between an open configuration, adapted to receive a parison and allow the extraction of a moulded container, and a closed configuration, adapted for the moulding of a container. The two half-moulds 2a, 2b reproduce the shape of the sidewall of the container to be produced.

The mould 2 is also equipped with a mould bottom 2c which reproduces the shape of the lower part (bottom) of the container to be produced. The mould bottom 2c is movable between a resting position, in which it is disengaged from the mould 2, and an operating position, in which it is locked between the two half-moulds 2a, 2b.

With particular reference to Figures 1, 2 and 7, the apparatus 1 comprises locking means 4 mutually movable between a disengaged position and an engaged position of the mould 2, to lock it when it is in said closed configuration. In the example illustrated, said locking means 4 preferably comprise a pair of rings 4a, 4b positioned at the top and bottom of the mould 2 which are adapted to surround the two half-moulds 2a, 2b, tightening them when the mould 2 is in said closed configuration.

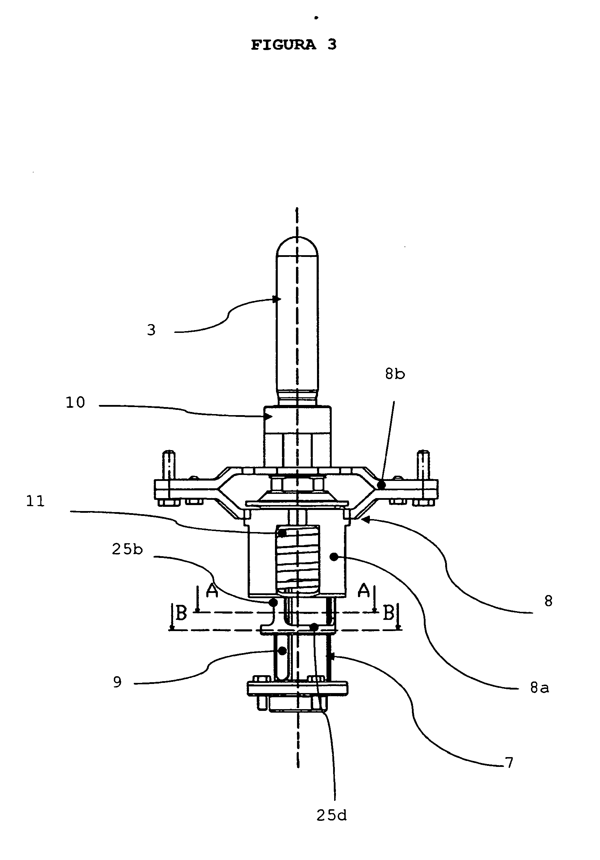

With reference to Figures 1-3, 6, 7 and 9, the apparatus 1 comprises a blowing nozzle 5. The nozzle 5 works inside said contamination controlled environment 100 and is movable between a resting position, in which it is located away from the parison 3, and an operating position, where it acts on the pparison 3, delivering pressurized air in it to form a container.

With specific reference to Figures 2, 3 and 6, the apparatus 1 comprises actuators 6 to move the nozzle 5 from said resting position to said operating position and vice versa. Advantageously, the actuators 6 are housed entirely within said contamination controlled environment 100 solving the technical problem of preventing said nozzle 5 from becoming a vehicle for contamination. Indeed, unlike the prior art, the actuators 6 do not move in and out of the contamination controlled environment 100.

With specific reference to Figures 2, 3, 6, 7 and 9, the actuators 6 are preferably controlled by the locking means 4. In particular, the actuators 6 comprise a guide 7 along which the nozzle 5 slides and a drive unit 8 operatively active on the nozzle 5 to translate it along said guide 7. The drive unit 8 is connected to the locking means 4, in particular to the ring 4b positioned at a lower base (with reference to Figure 1) of the mould 2. With reference to Figure 2, the drive unit 8 comprises a bushing 8a for the containment of the nozzle 5, slidably coupled to said guide 7. The drive unit 8 also comprises a coupling element 8b to connect said bushing 8a to said ring 4b positioned at the lower base of the mould 2. The drive unit 8 has a springy element 11, preferably a coil spring, inserted in said bushing 8a and operatively active on the nozzle 5, to allow its movement with respect to said bushing 8a.

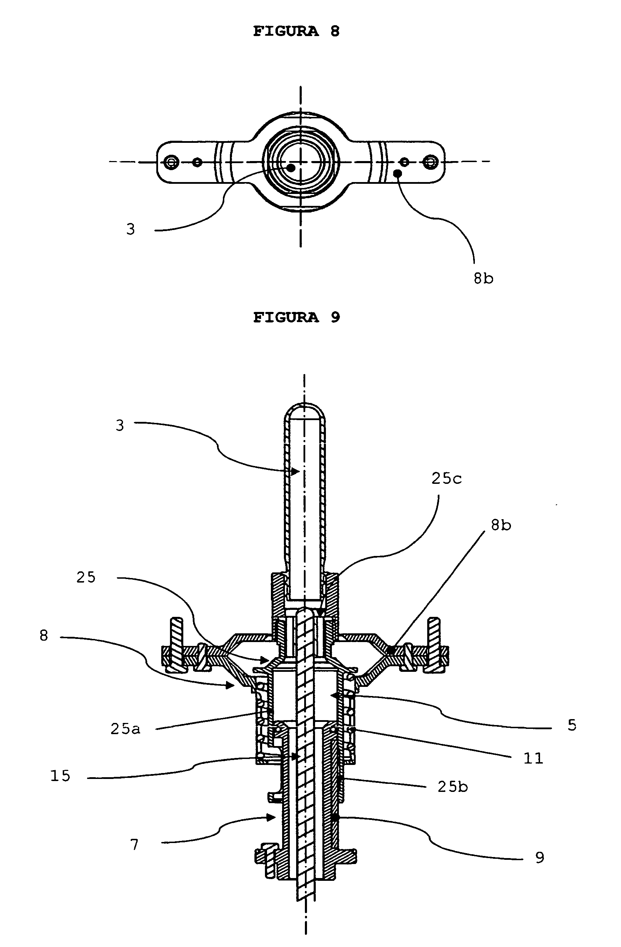

With particular reference to Figure 9, the nozzle 5 comprises a sleeve 25 slidably coupled to said guide 7 and having an outlet 25c for the blowing air. Preferably, the sleeve 25 has a sealing wall 25a adapted to deliver pressurized air to the parison 3 and a sliding wall 25b adapted to define a slipping contact on said guide 7.

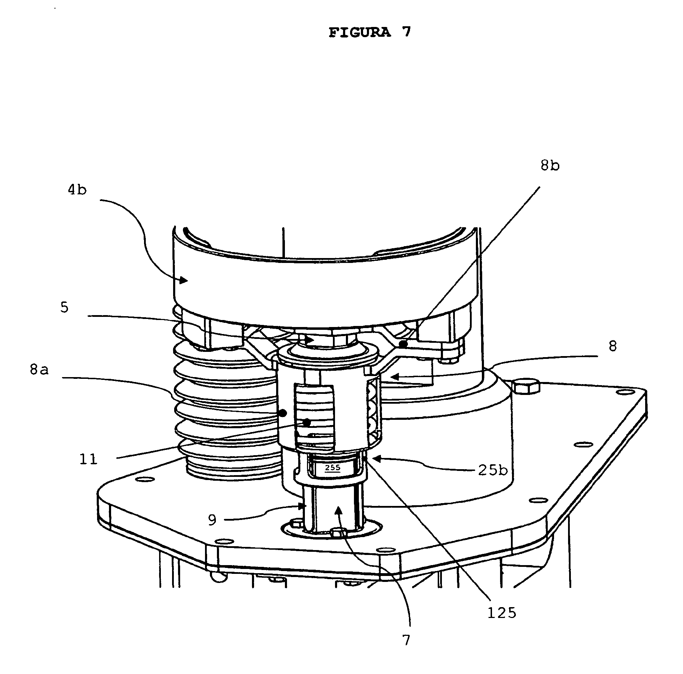

With particular reference to Figure 7, the slipping wall 25b is preferably defined by a plurality of separate slipping surfaces 125, for which the slipping contact between the guide 7 and the sleeve 25 is limited to isolated portions of the guide 7 in abutment with said slipping surfaces. Advantageously, the slipping contact limited to isolated portions of the guide 7 and the sliding wall 25b significantly reduces the risk that contaminant agents settle in the nozzle 5, thus ensuring the maintenance of the aseptic conditions in the environment 100 in which the apparatus 1 operates.

With particular reference to Figure 7, said slipping surfaces operate on corresponding blocks 9 present on the guide 7. Preferably, the slipping surfaces are positioned symmetrically with respect to a longitudinal axis of the nozzle 5, even more preferably at an angular distance of 120° from each other.

As shown in Figure 7, the sliding wall 25b has a plurality of through openings 255 to allow the sterilization of the nozzle 5 in a simple and effective manner.

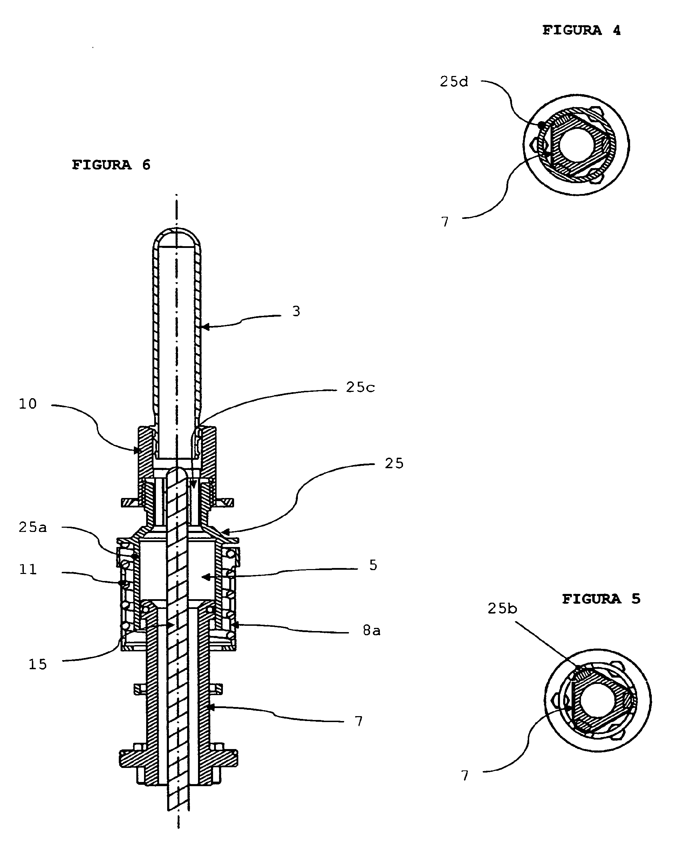

With particular reference to Figures 4 and 5, the guide 7 is preferably prism-shaped with substantially triangular bases. In particular, said sliding wall 25b has a ring shaped portion 25d restricted to the perimeter of a cross section of said guide 7. In this way, it is possible to ensure greater sliding accuracy of the sleeve 25 along the guide 7.

In accordance with an alternative embodiment not shown herein, the actuators 6 are controlled by moving parts located outside of said contamination controlled environment 100.

With particular reference to Figure 6, the apparatus 1 also comprises an interchangeable adapter 10 removably coupled to the nozzle 5 to adjust it to the neck of the parison 3. In the example shown, the adapter 10 is screwed on the outlet 25c of the sleeve 25. Advantageously, the adapter 10 allows the moulding of containers of different shapes.

The operation of the invention is as follows.

The parison 3, heated in advance, is introduced into the mould 2 and is positioned between the two half-moulds 2a, 2b.

Subsequently, the mould bottom 2c moves toward the lower part of the parison 3 and simultaneously the two half-moulds 2a, 2b close, locking the mould bottom 2c inside them. In the example shown, the two half-moulds 2a, 2b are locked in the closed position by the locking rings 4a, 4b.

Subsequently, the blowing nozzle 5 approaches the parison 3 and acts on the neck of the same to achieve the seal. Early in the moulding process, the blowing nozzle 5 delivers air at medium pressure (up to 15 bar) inside the preform 3. While air is being delivered at medium pressure, a stretching rod 15 is gradually extended and inserted into the parison 3 until reaching its bottom. After touching the bottom, the stretching rod 15 continues its linear stroke to stretch the parison 3 until the last reaches approximately the same length of the container to be produced.

Subsequently, the blowing nozzle 5 blows air at high pressure (around 40 bar) inside the parison 3 to expand it and make it adhere to the inner walls of the half-moulds 2a, 2b and to the mould bottom 2c. Simultaneously, the stretching rod 15 retracts and exits the container. The high pressure air is maintained for a few moments inside the container, so as to consolidate the moulding thereof.

Subsequently, the air in the container is discharged through said blowing nozzle 5. At the end of the discharge process the blowing nozzle 5 moves away to the disengaged position with respect to the container.

After the removal of the nozzle 5, the locking rings 4a, 4b disengage from the two half-moulds 2a, 2b, which can then open, allowing the removal of the mould bottom 2c and the subsequent extraction of the moulded container.

It should be noted that the movement of the nozzle 5 is controlled by the movement of the locking means 4a, 4b in this case by the ring 4b at the lower base of the mould 2. In fact, the drive unit 8 establishes a kinematic connection between the nozzle 5 and said locking ring 4b.

The springy element 11 (i.e. a coil spring) inserted into the bushing 8 and acting on the sealing wall 25a of the sleeve 25 allows the translation of the sleeve 25 in relation to said bushing 8a. In this way, the seal of the nozzle 5 against the neck of the parison 3 is ensured by the force exerted by the springy element 11 as a result of its compression caused by the displacement of the bushing 8a. Indeed, despite the fact that the outlet 25c of the sleeve 25 comes in contact with the neck of the parison 3, said bushing 8a continues its stroke along the guide 7 as a result of the drag exerted by the coupling element 8b connected to said locking ring 4b. It should be noted, in fact, that the bushing 8a is firmly connected to said coupling element 8b.

Thus the invention results in important advantages. First, an apparatus for moulding containers according to the invention is capable of operating in a contamination controlled environment, i.e. in aseptic conditions. Indeed, the actuators housed entirely within said contamination controlled environment resolve the technical problem of preventing the nozzle from becoming a vehicle for contamination. Indeed, unlike the prior art, the actuators do not move in and out of the aseptic area.

Advantageously, an apparatus for moulding containers according to the invention is easily sterilizable. In fact, since the sliding wall is defined by a plurality of separate slipping surfaces, the slipping contact between the guide and sleeve is limited to isolated portions of the guide in abutment with said slipping surfaces. Therefore, after performing the initial sterilization, the risk that contaminants will settle in the nozzle is very low, especially considering the fact that the nozzle and the actuators operate permanently within said sterile environment. Moreover, said sliding wall has a plurality of through openings that enable the simple and effective sterilization of the nozzle.

Advantageously, the apparatus for moulding containers according to the invention is reliable and simple to build.

## Claims

1. Apparatus (1) for moulding containers, comprising:
a mould (2) to receive a plastic parison (3) mutually movable between an open configuration and a closed configuration, said mould (2) being housed in a contamination controlled environment (100);
locking means (4) mutually movable between a disengaged position and an engaged position of the mould (2), so as to lock it when it is in said closed configuration;
a blowing nozzle (5) active within said contamination controlled environment (100) and movable between a resting position, where it is far from the parison (3),
and a working position, where it acts on the parison (3) to deliver pressurized air in it to form a container;
actuators (6) to activate the movement of the nozzle (5) between the resting position and the operating position and vice versa, said actuators (6) being housed entirely within said contamination controlled environment (100),
**characterized in that** said actuators (6) comprise:
a guide (7) upon which the nozzle (5) slides;
a drive unit (8) operatively active on the nozzle (5) to translate it along the guide (7), said drive unit (8) being connected to said locking means (4), said nozzle (5) comprising a sleeve (25) slidably coupled with said guide (7) and having an outlet (25c) for the blowing air, said sleeve (25) having a sealing wall (25a) that can convey pressurized air in the parison (3) through said outlet (25c) and a sliding wall (25b) adapted to define a slipping contact on said guide (7).

2. Apparatus (1) according to claim 1, wherein said actuators (6) are controlled by said locking means (4).

3. Apparatus (1) according to claim 1, wherein said sliding wall (25b) has a plurality of separate slipping surfaces (125), for which the slipping contact between the guide (7) and the sleeve (25) is limited to isolated portions of the guide (7) in abutment with said slipping surfaces.

4. Apparatus (1) according to claim 3, wherein said sliding wall (25b) has a plurality of through openings (255) to sterilize the nozzle (5).

5. Apparatus (1) according to claim 3 or 4, wherein said separate slipping surfaces (125) are active on corresponding blocks (9) present on said guide (7).

6. Apparatus (1) according to any of claims 3-5, wherein said separate slipping surfaces (125) are positioned symmetrically with respect to a longitudinal axis of the nozzle (5), preferably at an angular distance of 120° from each other.

7. Apparatus (1) according to claim 1 or 3-6, wherein the drive unit (8) comprises:
a bushing (8a) for the containment of the nozzle (5),
said bushing (8a) being slidably coupled to the guide (7);
a coupling element (8b) to connect said bushing (8a) to said locking means (4);
a springy element (11) inserted in said bushing (8a) and operatively active on the nozzle (5) to allow its movement with respect to said bushing (8a).

8. Apparatus (1) according to claim 1 or 3-6, wherein said guide (7) is prism-shaped with substantially triangular bases, said sliding wall (25b) having a ring shaped portion (25d) restricted to the perimeter of a cross section of said guide (7) to ensure the sliding accuracy of the sleeve (25) along the guide (7) thereof.

9. Apparatus (1) according to any of the preceding claims, wherein said actuators (6) are controlled by moving parts located outside said contamination controlled environment (100).

10. Apparatus (1) according to any of the preceding claims, also comprising an interchangeable adapter (10) removably coupled to an outlet (25c) of said nozzle (5) to adjust it to the neck of the parison (3).

## Patentansprüche

1. Vorrichtung (1) zur Formung von Behältern, umfassend:
ein Formwerkzeug (2) zur Aufnahme eines Kunststoffvorformlings (3), das reziprok zwischen einer offenen Konfiguration und einer geschlossenen Konfiguration beweglich ist, wobei das Formwerkzeug (2) in einer verunreinigungskontrollierten Umgebung (100) untergebracht ist;
Verschlussmittel (4), die reziprok zwischen einer Ausrückstellung und einer Eingriffsstellung des Formwerkzeugs (2) beweglich sind, sodass es verschlossen wird, wenn es in der geschlossenen Konfiguration ist;
eine Blasdüse (5), die innerhalb der verunreinigungskontrollierten Umgebung (100) wirkt und
zwischen einer Ruhestellung, in der sie weit vom Vorformling (3) entfernt ist, und einer Betriebsstellung, in der sie auf den Vorformling (3) einwirkt, um zur Bildung eines Behälters Druckluft in ihn zu leiten, beweglich ist;
Aktuatoren (6) zur Aktivierung der Bewegung der Düse (5) zwischen der Ruhestellung und der Betriebsstellung und umgekehrt, wobei die Aktuatoren (6) vollständig in der verunreinigungskontrollierten Umgebung (100) untergebracht sind,
**dadurch gekennzeichnet, dass** die Aktuatoren (6) Folgendes umfassen:
eine Führung (7), auf der die Düse (5) gleitet;
eine Antriebseinheit (8), die betriebswirksam auf die Düse (5) einwirkt, um sie entlang der Führung (7) zu verschieben, wobei die Antriebseinheit (8) mit den Verschlussmitteln (4) verbunden ist, wobei die Düse (5) eine Manschette (25) umfasst, die gleitend mit der Führung (7) verkoppelt ist und einen Auslass (25c) für die Blasluft aufweist, wobei die Manschette (25) eine abdichtende Wand (25a), die durch den Auslass (25c) Druckluft in den Vorformling (3) lenken kann und eine Gleitwand (25b), die dazu geeignet ist, einen Reibungskontakt auf der Führung (7) zu definieren, aufweist.

2. Vorrichtung (1) nach Anspruch 1, wobei die Aktuatoren (6) durch die Verschlussmittel (4) gesteuert werden.

3. Vorrichtung (1) nach Anspruch 1, wobei die Gleitwand (25b) eine Vielzahl von getrennten Reibungsflächen (125) aufweist, weshalb der Reibungskontakt zwischen der Führung (7) und der Manschette (25) auf isolierte Abschnitte der Führung (7) im Anschlag an die Reibungsflächen begrenzt ist.

4. Vorrichtung (1) nach Anspruch 3, wobei die Gleitwand (25b) eine Vielzahl von Durchgangsöffnungen (255) zur Sterilisierung der Düse (5) aufweist.

5. Vorrichtung (1) nach Anspruch 3 oder 4, wobei die getrennten Reibungsflächen (125) auf entsprechenden auf der Führung (7) vorhandenen Blöcken (9) wirken.

6. Vorrichtung (1) nach einem der Ansprüche 3-5, wobei die getrennten Reibungsflächen (125) in Bezug auf eine Längsachse der Düse (5) symmetrisch positioniert sind, vorzugsweise bei einem 120°-Winkelabstand voneinander.

7. Vorrichtung (1) nach Anspruch 1 oder 3-6, wobei die Antriebseinheit (8) Folgendes umfasst:
eine Buchse (8a) zum Halt der Düse (5), wobei die Buchse (8a) gleitend mit der Führung (7) verkoppelt ist;
ein Kopplungselement (8b) zur Verbindung der Buchse (8a) mit den Verschlussmitteln (4);
ein federndes Element (11), das in die Buchse (8a) eingefügt ist und betriebswirksam auf die Düse (5) einwirkt, um ihre Bewegung in Bezug auf die Buchse (8a) zu gestatten.

8. Vorrichtung (1) nach Anspruch 1 oder 3-6, wobei die Führung (7) die Form eines Prismas mit im Wesentlichen dreieckigen Basen aufweist, wobei die Gleitwand (25b) einen ringförmigen Abschnitt (25d) aufweist, der auf den Perimeter eines Querschnitts der Führung (7) beschränkt ist, um ein akkurates Gleiten der Manschette (25) entlang seiner Führung (7) zu gewährleisten.

9. Vorrichtung (1) nach einem der vorangehenden Ansprüche, wobei die Aktuatoren (6) von sich bewegenden Teilen kontrolliert werden, die sich außerhalb der verunreinigungskontrollierten Umgebung (100) befinden.

10. Vorrichtung (1) nach einem der vorangehenden Ansprüche, ferner umfassend ein austauschbares Anpassungsstück (10), das abnehmbar mit einem Auslass (25c) der Düse (5) verkoppelt ist, um es an den Kragen des Vorformlings (3) anzupassen.

## Revendications

1. Appareil (1) pour mouler des récipients, comprenant :
un moule (2) pour recevoir une ébauche en plastique (3) mutuellement mobile entre une configuration ouverte et
une configuration fermée, ledit moule (2) étant logé dans un environnement à contamination contrôlée (100) ;
des moyens de verrouillage (4) mutuellement mobiles entre une position désengagée et une position engagée du moule (2), afin de le verrouiller lorsqu'il se trouve dans ladite configuration fermée ; une buse de soufflage (5) active à l'intérieur dudit environnement à contamination contrôlée (100) et mobile entre une position de repos, dans laquelle il est éloigné de l'ébauche (3), et une position de travail, dans laquelle il agit sur l'ébauche (3) pour envoyer de l'air sous pression à l'intérieur de cette dernière afin de former un récipient ;
des actionneurs (6) pour activer le déplacement de la buse (5) entre la position de repos et la position opérationnelle et vice versa, lesdits actionneurs (6) étant entièrement logés dans ledit environnement à contamination contrôlée (100), **caractérisé en ce que** lesdits actionneurs (6) comprennent :
un guide (7) sur lequel glisse la buse (5) ;
une groupe d'entraînement (8) opérationnellement actif sur la buse (5) pour la déplacer le long du guide (7),
ledit groupe d'entraînement (8) étant relié auxdits moyens de verrouillage (4), ladite buse (5) comprenant un manchon (25) accouplé de façon coulissante audit guide (7) et présentant une sortie (25c) pour l'air soufflé, ledit manchon (25) ayant une paroi étanche (25a) qui peut transporter l'air sous pression vers l'ébauche (3) à travers ladite sortie (25c) et une paroi coulissante (25b) adaptée pour définir un contact glissant sur ledit guide (7).

2. Appareil (1) selon la revendication 1, dans lequel lesdits actionneurs (6) sont contrôlés par lesdits moyens de verrouillage (4).

3. Appareil (1) selon la revendication 1, dans lequel ladite paroi coulissante (25b) a une pluralité de surfaces glissantes séparées (125), pour lesquelles le contact glissant entre le guide (7) et le manchon (25) est limité aux positions isolées du guide (7) en butée sur lesdites surfaces glissantes.

4. Appareil (1) selon la revendication 3, dans lequel ladite paroi coulissante (25b) a une pluralité d'ouvertures passantes (255) pour stériliser la buse (5).

5. Appareil (1) selon les revendications 3 ou 4, dans lequel lesdites surfaces coulissantes (125) sont actives sur des blocs correspondants (9) présents sur ledit guide (7).

6. Appareil (1) selon l'une quelconque des revendications 3-5, dans lequel lesdites surfaces glissantes séparées (125) sont positionnées symétriquement par rapport à un axe longitudinal de la buse (5), de préférence à une distance angulaire de 120° l'une de l'autre.

7. Appareil (1) selon les revendications 1 ou 3-6, dans lequel le groupe d'entraînement (8) comprend :
une bague (8a) pour contenir la buse (5), ladite bague (8a) étant accouplée de façon coulissante au guide (7);
un élément d'accouplement (8b) pour relier ladite bague (8a) auxdits moyens de verrouillage (4) ;
un élément élastique (11) inséré dans ladite bague (8a) et opérationnellement actif sur la buse (5) pour permettre son mouvement par rapport à ladite bague (8a).

8. Appareil (1) selon les revendications 1 ou 3-6, dans lequel le guide (7) a la forme d'un prisme avec des bases essentiellement triangulaires, ladite paroi coulissante (25b) ayant une partie en forme d'anneau (25d) limitée au périmètre d'une section transversale dudit guide (7) pour assurer la précision de coulissement du manchon (25) le long du guide (7).

9. Appareil (1) selon l'une quelconque des revendications précédentes, dans lequel lesdits actionneurs (6) sont contrôlés par des parties mobiles situées à l'extérieur dudit environnement à contamination contrôlée (100).

10. Appareil (1) selon l'une quelconque des revendications précédentes, comprenant également un adaptateur interchangeable (10) accouplé de façon amovible à une sortie (25c) de ladite buse (5) pour l'adapter au col de l'ébauche (3).
